# EUROPEAN PATENT APPLICATION

(11) **EP 4 485 566 A1**
(43) Date of publication of application: **01.01.2025**
(21) Application number: 23760012.7
(22) Date of filing: 22.02.2023
(51) Int. Cl.: H01M 4/139, H01M 4/04, H01M 4/62

(54) **METHOD FOR PRODUCING POSITIVE ELECTRODE MIXTURE SLURRY**

(30) Priority: 25.02.2022 JP 2022027668
(71) Applicant: Panasonic Energy Co., Ltd., Osaka 570-8511 (JP)
(72) Inventor: MINO Shinji, Kadoma-shi, Osaka 571-0057 (JP); KISARAGI Amiri, Kadoma-shi, Osaka 571-0057 (JP)
(74) Representative: Novagraaf International SA
(86) International application number: PCT/JP2023/006379
(87) International publication number: WO 2023/163013

(57) **Abstract**

One example of the method for producing a positive electrode mixture slurry according to the present invention comprises: a first step in which a first slurry is prepared by kneading a positive electrode active material, a binder and a dispersion medium; and a second step in which a second slurry is prepared by adding a conductive agent and a dispersant to the first slurry and kneading the resulting mixture. In the second step, the kinetic energy applied to the slurry is set higher than those in the other steps. The production process of the positive electrode mixture slurry may comprise a third step in which a dispersant is added to the second slurry and the resulting mixture is kneaded.

## Description

### TECHNICAL FIELD

The present disclosure relates to a method for producing a positive electrode mixture slurry, and more particularly to a method for producing a positive electrode mixture slurry used in producing a positive electrode (or positive electrode mixture layer) for a non-aqueous electrolyte secondary battery.

### BACKGROUND ART

A positive electrode of a non-aqueous electrolyte secondary battery such as a lithium ion battery is generally produced by applying a positive electrode mixture slurry containing a positive electrode active material, a binder, a conductive agent, and a dispersion medium onto a core made of metal foil or the like, and drying and compressing the applied coating. For this reason, the properties of the positive electrode mixture slurry significantly affect the producibility of the positive electrode, and may also affect the battery performance.

For example, Patent Literature 1 discloses a method for producing a slurry used for electrode production, wherein the method is aimed to suppress deterioration in applicability. The method of Patent Literature 1 comprises: a slurry preparation step of preparing a slurry by adding a diluent to a thickener and kneading the mixture; a first kneading step of adding a powder material to the slurry and kneading the mixture; and a second kneading step of adding a binder to the kneaded product obtained in the first kneading step and further kneading the mixture. This method is characterized in that, in the first kneading step, the mixture of the thickener slurry and the powder material is maintained at a temperature of higher than or equal to 5 °C and lower than or equal to 15 °C.

### CITATION LIST

### PATENT LITERATURE

PATENT LITERATURE 1: Japanese Unexamined Patent Application Publication No. 2020-45462

### SUMMARY

In a positive electrode mixture slurry, it is an important issue to suppress the phenomenon of dilatancy caused by rheological properties. When dilatancy occurs in which the viscosity of the slurry increases due to application of shear force to the slurry, there may occur problems such as poor applicability of the slurry, filter clogging, and stagnation of the slurry in a pipeline.

Further, while it is desired to increase the solids concentration of the slurry to improve the producibility of the positive electrode, there is the problem that when the solids concentration is increased, dilatancy is more likely to occur. In conventional slurry production methods including the method of Patent Literature 1, hardly any consideration has been made regarding suppression of dilatancy, and there is still room for improvement.

A method for producing a positive electrode mixture slurry according to the present disclosure includes: a first step of preparing a first slurry by kneading together a positive electrode active material, a binder, and a dispersion medium; and a second step of preparing a second slurry by adding a conductive agent and a dispersant to the first slurry and kneading the mixture. In the second step, kinetic energy applied to the slurry is greater than that in any other step.

The method for producing a positive electrode mixture slurry according to the present disclosure preferably further includes a third step of preparing a third slurry by further adding the dispersion medium to the second slurry and kneading the mixture. The solids concentration of the third slurry is adjusted to, for example, greater than or equal to 80 mass%.

According to the method for producing a positive electrode mixture slurry according to the present disclosure, it is possible to provide a positive electrode mixture slurry in which dilatancy is suppressed. Furthermore, by employing the production method according to the present disclosure, it is possible to, for example, increase the solids concentration in the slurry while suppressing dilatancy, and the producibility of the positive electrode is thereby improved.

### BRIEF DESCRIPTION OF DRAWINGS

[FIG. 1] FIG. 1 is a diagram showing an example production flow of a positive electrode mixture slurry.
[FIG. 2] FIG. 2 is a diagram showing the relationship between shear rate and shear viscosity of a positive electrode mixture slurry.

### DESCRIPTION OF EMBODIMENTS

As mentioned above, in a positive electrode mixture slurry, it is an important issue to suppress the phenomenon of dilatancy in which the viscosity of the slurry increases due to application of shear force. The present inventors conducted intensive studies to solve this issue, and as a result discovered that dilatancy can be effectively suppressed by applying, in the step of adding a conductive agent and a dispersant and performing kneading, greater kinetic energy to the slurry than in any other step.

That is, greater kinetic energy is applied in the kneading performed after adding the conductive agent and the dispersant than in the step of kneading together the positive electrode active material, the binder, and the dispersion medium. Furthermore, when the third step of further adding the dispersion medium is to be performed, before further adding the dispersion medium to reduce the solids concentration, a large amount of kinetic energy is applied to the slurry to which the conductive agent has been added. It is considered that the dispersion of the conductive agent has a significant influence on the rheology of the positive electrode mixture slurry. According to the method according to the present disclosure, the dispersion of the conductive agent is improved by kneading the slurry by applying a large force thereto at the time of adding the conductive agent and the dispersant, and it is presumed that dilatancy is effectively suppressed as a result.

Dilatancy is considered to be caused by temporary aggregation of the conductive agent, and is particularly likely to occur when the solids concentration of the slurry is high. According to the method according to the present disclosure, dilatancy can be highly suppressed even when the solids concentration of the slurry is increased up 80 %. For this reason, the method according to the present disclosure is extremely useful in increasing the solids concentration of the slurry and improving the producibility of the positive electrode.

Example embodiments of the method for producing a positive electrode mixture slurry according to the present disclosure will be described below in detail by reference to the drawings. The present disclosure encompasses selective combinations of embodiments and variants described below.

The production method according to the present disclosure is widely applicable to production of a positive electrode mixture slurry containing a positive electrode active material, a binder, a conductive agent, and a dispersion medium. A positive electrode mixture slurry obtained by the production method according to the present disclosure is suitable for use in producing a positive electrode for a non-aqueous electrolyte secondary battery. The non-aqueous electrolyte secondary battery may be, for example, a lithium ion battery, but may alternatively be other non-aqueous electrolyte secondary batteries such as a lithium battery.

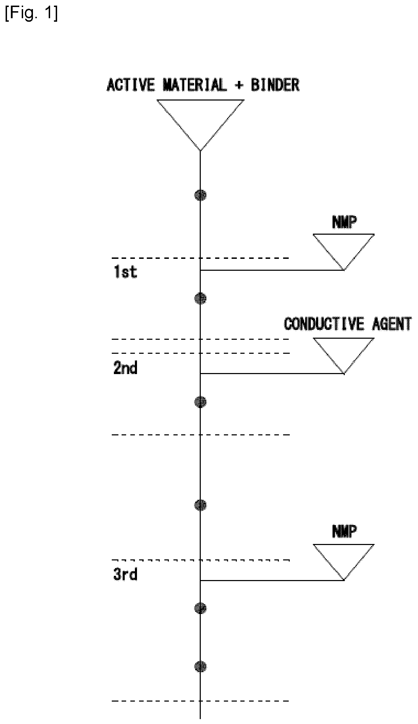

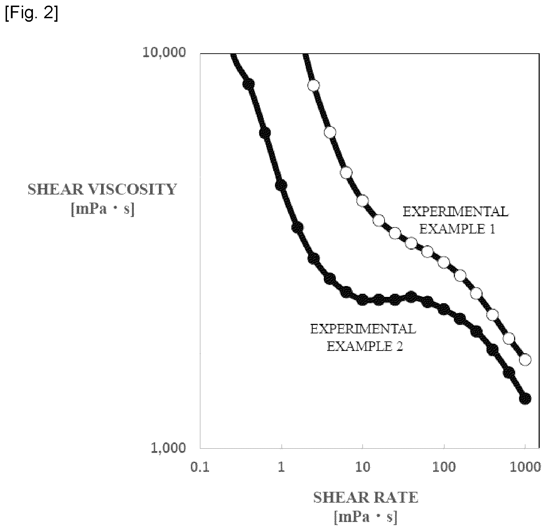

FIG. 1 is a flow diagram showing an example method for producing a positive electrode mixture slurry according to the present disclosure. In FIG. 1, each step of mixing and kneading materials is indicated by a black circle. FIG. 2 is a diagram showing the relationship between shear rate and shear viscosity of a positive electrode mixture slurry obtained by this production method. In FIG. 2, for comparison, there is also shown the relationship for a case where a slurry is kneaded in such a manner that kinetic energy applied to the slurry before addition of the conductive agent is the greatest.

As shown in FIG. 1, a positive electrode mixture slurry production process according to an example embodiment includes: a first step of preparing a first slurry by kneading together a positive electrode active material, a binder, and a dispersion medium; and a second step of preparing a second slurry by adding a conductive agent and a dispersant to the first slurry and kneading the mixture. In the second step, kinetic energy applied to the slurry is greater than that in any other step. As will be described in further detail below, in the positive electrode mixture slurry obtained by this method, even when shear stress is acted thereon, an increase in shear viscosity is unlikely to occur and dilatancy is effectively suppressed, as shown in FIG. 2.

The positive electrode mixture slurry is, for example, supplied to a coating applicator such as a die coater through a pipeline having a filter. At that time, if dilatancy occurs, filter clogging, slurry stagnation, coating defects, and the like may be caused, but according to the slurry of the present embodiment, occurrence of such problems can be highly suppressed. The positive electrode mixture slurry is applied to a surface of a positive electrode core made of metal foil or the like, and is formed as a coating. The coating is dried and then compressed to form a positive electrode mixture layer containing the positive electrode active material, the binder, and the conductive agent. A positive electrode having the positive electrode mixture layer formed on the positive electrode core is thereby obtained.

The positive electrode mixture slurry production process according to the example embodiment further includes a third step of preparing a third slurry by further adding the dispersion medium to the second slurry and kneading the mixture. By providing the third step, while effectively suppressing dilatancy, the viscosity of the slurry can be easily adjusted to a viscosity suitable for the above-described coating process by further adding the dispersion medium. In the present embodiment, after the conductive agent is sufficiently dispersed in the second step, the dispersion medium is further added to adjust the solids concentration (or viscosity).

From the perspective of improving the producibility of the positive electrode, the positive electrode mixture slurry obtained by the production method according to the example embodiment preferably has a solids concentration of greater than or equal to 80 mass%. In the present embodiment, in the third step, the solids concentration of the slurry is adjusted to greater than or equal to 80 mass%. The solids concentration of the slurry is more preferably greater than or equal to 81 mass%, and particularly preferably greater than or equal to 82 mass%. The upper limit of the solids concentration is, for example, greater than or equal to 85 mass% and less than or equal to 90 mass%.

When the solids concentration of a positive electrode mixture slurry is high, and particularly when the solids concentration is greater than or equal to 80 mass%, dilatancy is likely to occur. However, according to the production method of the present embodiment, even when the solids concentration is greater than or equal to 80 mass%, dilatancy can be highly suppressed. The production method of the present embodiment exhibits a more prominent dilatancy suppression effect when the solid content is greater than or equal to 80 mass% (for example, greater than or equal to 80 mass% and less than or equal to 90 mass%).

Each of the first step, the second step, and the third step, which constitute a series of production steps of the present embodiment, will now be described in detail.

### [First Step]

In the first step, as described above, a first slurry is prepared by kneading together the positive electrode active material, the binder, and the dispersion medium. That is, before adding the conductive agent to the slurry, the positive electrode active material and the binder are dispersed in the dispersion medium. The solids concentration of the first slurry is higher than the solids concentration of the finally obtained positive electrode mixture slurry, and is preferably greater than or equal to 84 mass% and less than or equal to 90 mass%.

In the example shown in FIG. 1, the positive electrode active material and the binder are dry-blended before being added to the dispersion medium. Then, the mixture of the positive electrode active material and the binder is kneaded together with the dispersion medium to prepare the first slurry. For the dry blending, a mixer or the like to be employed in the first step can be used.

As the positive electrode active material, a lithium-containing transition metal composite oxide in particulate form is generally used. The lithium-containing transition metal composite oxide is a composite oxide that contains Co, Mn, Ni, Al, or the like in addition to Li. The metal element constituting the lithium-containing transition metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from Co, Ni, and Mn is preferably contained. Examples of a suitable composite oxide include a composite oxide containing Ni, Co, and Mn, and a composite oxide containing Ni, Co, and Al.

The proportion of the positive electrode active material in the solid content of the positive electrode mixture slurry is, for example, greater than or equal to 90 mass%, preferably greater than or equal to 90 mass% and less than or equal to 99.5 mass%, and more preferably greater than or equal to 95 mass% and less than or equal to 99 mass%. The volume-based median diameter (hereinafter may be referred to as "D50") of the positive electrode active material is greater than or equal to 1 µm and less than or equal to 25 µm, and preferably greater than or equal to 3 µm and less than or equal to 15 µm. D50 means a particle size at which, in a volume-based particle size distribution, the cumulative frequency from the smaller particle size end reaches 50 %. The particle size distribution of the composite oxide particles can be measured with a laser diffraction particle size distribution measuring device (for example, MT3000II manufactured by MicrotracBEL Corp.) using water as a dispersion medium. Two or more types of active materials having different compositions, D50s, and the like may be added to the first slurry.

As the binder, a fluorine-containing resin such as polytetrafluoroethylene (PTFE) or polyvinylidene fluoride (PVdF), polyacrylonitrile (PAN), polyimide, acrylic resin, polyolefin, or the like is used. Further, as both the binder and a thickener, it is possible to use these resins in combination with carboxymethyl cellulose (CMC) or a salt thereof, polyethylene oxide (PEO), or the like. The proportion of the binder in the solid content of the positive electrode mixture slurry is, for example, greater than or equal to 0.1 mass% and less than or equal to 8 mass%, preferably greater than or equal to 0.2 mass% and less than or equal to 5 mass%, and more preferably greater than or equal to 0.5 mass% and less than or equal to 3 mass%. Two or more types of binders may be added to the first slurry.

The dispersion medium serves to, for example, disperse the positive electrode active material and the conductive agent, and dissolve the binder. As the dispersion medium, although water, lower alcohols such as ethanol, and the like may be used depending on the type of the binder and the like, an organic solvent is generally used. Examples of an organic solvent suitable as the dispersion medium include N-methyl-2-pyrrolidone (NMP), cyclohexane, methyl ethyl ketone, and methyl isobutyl ketone. When the binder is a fluorine-containing resin such as PVdF, it is preferable to use NMP.

For the kneading in the first step, it is possible to use a conventionally known disperser or mixer (hereinafter referred to as a "mixer or the like") that is usable for slurry preparation. Examples of the mixer or the like include a planetary mixer, a homogenizing mixer, a pin mixer, a high-speed mixer, a disperser, a roll mill, a ball mill, a jet mill, and a kneader. Among these, it is preferable to use a planetary mixer. Although different mixers or the like may be used in the first, second and third steps, considering productivity and the like, the same mixer or the like is preferably used in the respective steps.

A planetary mixer is a stirring mixer of a rotating and revolving type, which can apply strong shear force to the slurry using blades performing planetary motion. A planetary mixer typically has two frame-shaped blades. Each blade may be either of a straight type with no twist or of a non-straight type with twist. In the present embodiment, since the same planetary mixer is used in the respective steps, kinetic energy applied to the slurry can be controlled by adjusting the stirring speed and the stirring time, and kinetic energy increases with higher stirring speed and longer stirring time. The details of the kneading conditions will be described further below.

### [Second Step]

In the second step, as described above, a second slurry is prepared by adding a conductive agent and a dispersant to the first slurry containing the positive electrode active material and the binder, and kneading the mixture. The conductive agent is preferably supplied in the form of a paste in which the conductive agent is dispersed in advance in a predetermined dispersion medium. Here, the paste contains the dispersant. While the predetermined dispersion medium may be different from the dispersion medium of the first slurry, the two dispersion mediums are preferably miscible with each other. The solids concentration of the second slurry is approximately equal to or somewhat lower than the solids concentration of the first slurry, and is preferably greater than or equal to 81 mass% and less than or equal to 86 mass%. In the second step, the slurry is preferably stirred vigorously and for a long time so that kinetic energy applied to the slurry is greater than that in the first step.

As the conductive agent, a carbon-based conductive agent is preferably used. Examples of the carbon-based conductive agent include carbon black such as acetylene black and Ketjenblack, graphite, carbon nanotubes, carbon nanofibers, and graphene. Two or more types of conductive agents may be added to the second slurry. The proportion of the conductive agent in the solid content of the positive electrode mixture slurry varies somewhat depending on the type of the conductive agent and the like, but is, for example, greater than or equal to 0.1 mass% and less than or equal to 8 mass%, preferably greater than or equal to 0.2 mass% and less than or equal to 5 mass%, and more preferably greater than or equal to 0.5 mass% and less than or equal to 3 mass%. The particle size of the conductive agent is smaller than the particle size of the positive electrode active material.

The dispersant is a chemical agent that facilitates dispersion of the conductive agent in the dispersion medium. As the dispersant, it is possible to use, for example, a polymer having a surfactant effect, a cationic surfactant, a nonionic surfactant, and other surfactants. Among these, a dispersant having a nonionic surfactant effect, which does not inhibit movement of lithium ions inside the battery, is preferred. Two or more types of dispersants may be added to the second slurry.

Specific examples of a suitable dispersant include polyvinyl alcohol, polyvinylpyrrolidone, polyalkylene oxide, polyvinyl acetal, polyvinyl ether, cellulose-based polymers, chitins, chitosans, and starch. The molecular weight (or weight average molecular weight) of the dispersant is not particularly limited, but is, for example, greater than or equal to 5,000 and less than or equal to 300,000. The content of the dispersant in the conductive agent paste can be adjusted as appropriate depending on the types and the like of the conductive agent and the dispersion medium.

For the kneading in the second step, the above-described mixer or the like can be used. For example, the mixer or the like used in the first step and containing the first slurry is used as is. The mixer or the like is preferably a planetary mixer. In the following, the kneading conditions and the like will be described referring, as an example, to a case in which a planetary mixer is used.

In the second step, after adding the conductive agent and the dispersant (i.e., the conductive agent paste) to the first slurry prepared in the first step, the slurry is kneaded in such a manner that kinetic energy applied to the slurry is greater than those in the first step and the subsequent third step, and a second slurry having the conductive agent uniformly dispersed therein is thereby prepared. The rotation speed of the planetary mixer is set to be greater than the rotation speeds in the first step and the third step. The stirring time may be less than those in the other steps, but is preferably set to be more than in the other steps.

In the second step, at least the maximum value of the kinetic energy applied to the slurry is set to be greater than that in the other steps. More preferably, both the maximum value and the cumulative value of the kinetic energy applied to the slurry are set to be greater than those in the other steps. By kneading the slurry by applying a large force thereto at the time of adding the conductive agent and the dispersant, the dispersion of the conductive agent is greatly improved. It is considered that, as a result, dilatancy is effectively suppressed.

Although the kneading conditions in the second step are not limited to specific conditions, it is preferable that the rotation speed of the planetary mixer is greater than or equal to 40 rpm and the stirring time is more than or equal to 20 minutes. An example of a suitable range for the rotation speed is greater than or equal to 40 rpm and less than or equal to 50 rpm, and an example of a suitable range for the stirring time is more than or equal to 25 minutes and less than or equal to 45 minutes. In contrast, the rotation speed of the planetary mixer in the first step is preferably less than or equal to 25 rpm, and is, for example, greater than or equal to 10 rpm and less than or equal to 20 rpm. The stirring time in the first step is preferably less than or equal to 15 minutes, and is, for example, more than or equal to 3 minutes and less than or equal to 10 minutes.

In the example shown in FIG. 1, in the second step, a plurality of (i.e., two) kneading patterns are set, which differ from each other in the rotation speed of the planetary mixer and the stirring time. It is sufficient so long as, in at least one of these two kneading stages, the rotation speed of the planetary mixer is set to be greater than the rotation speeds in the first step and the third step.

### [Third Step]

In the third step, as described above, a third slurry is prepared by further adding the dispersion medium to the second slurry and kneading the mixture. Although a fourth or fifth step of further adding the dispersion medium in a further divided manner may be provided, in the present embodiment, the third slurry prepared in the third step serves as the positive electrode mixture slurry to be applied to the positive electrode core. The slurry is stirred less vigorously than in the second step to prepare the positive electrode mixture slurry in which the further added dispersion medium is uniformly mixed. In the third step, the solids concentration of the slurry is adjusted to, for example, greater than or equal to 80 mass% and less than or equal to 85 mass%.

The kneading conditions in the third step are not limited to specific conditions, but it is preferable that the rotation speed of the planetary mixer is less than that in the second step. The rotation speed of the planetary mixer in the third step is preferably less than or equal to 35 rpm, and is, for example, greater than that in the first step. An example of the rotation speed is greater than or equal to 20 rpm and less than or equal to 30 rpm.

In the example shown in FIG. 1, in the third step, a plurality of (i.e., two) kneading patterns are set, which differ from each other in the rotation speed of the planetary mixer and the stirring time. The total stirring time in the third step may be longer than that in the second step, but from the perspective of improving productivity and the like, the time is preferably set to a short period of time within a range which enables uniform mixing of the further added dispersion medium.

Although the positive electrode active material and the binder are dry-blended and then added to and kneaded together with the dispersion medium in the example shown in FIG. 1, the method of mixing the positive electrode active material, the binder, and the dispersion medium is not limited thereto. For example, these materials may be simultaneously added in the mixer or the like and kneaded together. Furthermore, a plurality of kneading patterns may be set in the first step, and it is also possible to set only one kneading pattern in the second step and in the third step.

### EXAMPLES

While the present disclosure will be explained in more detail below using Experimental Examples, the present disclosure is not limited to these Experimental Examples.

### <Experimental Example 1>

A first slurry was prepared by dry-blending lithium nickel oxide (positive electrode active material) having a D50 of 10 µm and PVdF in a mass ratio of 100: 1 using a planetary mixer (model 3D-2 manufactured by PRIMIX), then putting NMP therein, and kneading the mixture (first step). The solids concentration of the first slurry was adjusted to 87 mass%. Next, a second slurry was prepared by adding, to the first slurry, an AB paste in which acetylene black (AB) has been dispersed in advance in NMP, and kneading the mixture (second step). The AB paste contained polyvinyl alcohol as a dispersant. The solids concentration of the second slurry was adjusted to 84 mass%. Subsequently, NMP was additionally put in the second slurry, and the mixture was kneaded (third step). Through this series of steps, a positive electrode mixture slurry with a solids concentration of 83 mass% was prepared.

The kneading conditions in the first to third steps were as follows.
First step - Rotation speed: 15 rpm; Stirring time: 5 minutes
Second step - Rotation speed: 45 rpm; Stirring time: 30 minutes
Third step - Rotation speed: 25 rpm; Stirring time: 15 minutes

After completion of the second step and before putting in the additional NMP (i.e., before the third step), kneading was performed under the conditions of a rotation speed of 25 rpm and a stirring time of 15 minutes.

### <Experimental Example 2>

A positive electrode mixture slurry was prepared in the same manner as in Experimental Example 1 except that, before the addition of acetylene black, a kneading process was performed in which kinetic energy applied to the slurry became the greatest. Specifically, the first slurry was prepared by adding NMP to the above-described mixture obtained by dry-blending the positive electrode active material and PVdF, and kneading the mixture under the conditions of a rotation speed of 45 rpm and a stirring time of 30 minutes. Next, the above-described AB paste was added to the first slurry, then NMP was additionally put therein, and the slurry was kneaded under conditions of a rotation speed of 25 rpm and a stirring time of 15 minutes. A positive electrode mixture slurry with a solids concentration of 83 mass% was thereby prepared.

Regarding the positive electrode mixture slurry of each of the Experimental Examples, the shear viscosity of the slurry was measured using a rheometer (MCR102 manufactured by Anton Paar) while varying the shear rate. FIG. 2 shows the relationship between shear rate and shear viscosity. As shown in FIG. 2, in the slurry of Experimental Example 2, a phenomenon of dilatancy occurred, in which the shear viscosity generally decreased with increasing shear rate but showed an increase at a midway point. In contrast to this, in Experimental Example 1, with increasing shear rate, the shear viscosity decreased accordingly, and a positive electrode mixture slurry in which dilatancy was suppressed could be obtained.

## Claims

1. A production method of a positive electrode mixture slurry, comprising:
a first step of preparing a first slurry by kneading together a positive electrode active material, a binder, and a dispersion medium; and
a second step of preparing a second slurry by adding a conductive agent and a dispersant to the first slurry and performing kneading thereof, wherein
in the second step, kinetic energy applied to the slurry is greater than that in any other step.

2. The production method according to claim 1, further comprising a third step of preparing a third slurry by further adding the dispersion medium to the second slurry and performing kneading thereof.

3. The production method according to claim 2, wherein a solids concentration of the third slurry is adjusted to greater than or equal to 80 mass%.

4. The production method according to any one of claims 1 to 3, wherein, in at least the second step, the slurry is kneaded using a planetary mixer.
